# EUROPÄISCHE PATENTSCHRIFT

(11) **EP 3 429 887 B1**
(45) Veröffentlichungstag und Bekanntmachung des Hinweises auf die Patenterteilung: **05.08.2020**
(21) Anmeldenummer: 17710529.3
(22) Anmeldetag: 13.03.2017
(51) Int. Cl.: B60N 2/02, B60N 2/005, B60N 2/01, B60N 2/14, B62D 25/08

(54) **FAHRZEUG MIT EINER MITTELSITZPOSITION**
VEHICLE HAVING A CENTRAL SEAT POSITION
VÉHICULE À POSITION DE SIÈGE CENTRALE

(30) Priorität: 14.03.2016 DE 102016104568
(43) Veröffentlichungstag der Anmeldung: 23.01.2019
(73) Patentinhaber: Teamobility GmbH, 71034 Böblingen (DE)
(72) Erfinder: TOMFORDE, Johann, 71069 Sindelfingen (DE)
(74) Vertreter: Mammel und Maser
(86) Internationale Anmeldenummer: PCT/EP2017/055815
(87) Internationale Veröffentlichungsnummer: WO 2017/157838

(56) Entgegenhaltungen:
- EP-A1- 2 128 000
- DE-A1- 1 430 293
- FR-A1- 2 707 566
- FR-A1- 3 015 429
- US-A1- 2003 141 736

## Beschreibung

Die Erfindung betrifft ein Fahrzeug mit einer Mittelsitzposition.

Es sind Fahrzeuge bekannt, bei welchen der Fahrersitz in der Mitte oder relativ weit entfernt von der Außenkante von Karosserieaufbauten oder in einer Fahrgastzelle angeordnet ist. Um ein Ein- und Aussteigen zu erleichtern, wird bei solchen Fahrzeugen ein Drehsitz vorgeschlagen, der auf einer zentrischen oder exzentrischen Drehkonsole drehbar ist. Solche Drehsitze weisen den Nachteil auf, dass diese ein sehr hohes Gewicht und einen sehr großen Bauraum beziehungsweise große Bauhöhen erfordern. Zusätzlich sind diese umständlich in der Handhabung. Darüber begünstigen solche Drehsitze weder ergonomisch noch komfortseitig Ein-und Ausstiegsverhältnisse für den Benutzer. Insbesondere bei beruflich und gewerblich eingesetzten Fahrzeugen kommt es dadurch häufig zu Gesundheitsproblemen.

Aus der US 2003/0141 736 A1 ist ein Fahrzeug mit einer Fahrzeugstruktur bekannt, auf welcher eine drehbare Plattform vorgesehen ist. Diese drehbare Plattform nimmt wiederum zwei Sitze auf, die relativ zur Plattform drehbar sind. Durch Drehung der Plattform können die Fahrersitze in unterschiedliche Positionen bewegt werden.

Aus der FR 3 015 429 A1 ist ein Pilotensitz bekannt, der auf einer Schwenkanordnung vorgesehen ist. Der Pilotensitz ist auf einem Schwenkhebel positioniert, so dass der gesamte Pilotensitz innerhalb eines Radius des Schwenkarmes schwenkbar ist.

Aus der FR 2 707 566 A1 ist eine Sitzverstellung bekannt, bei welcher ein Sitzskelett auf einer Rastschiene verschiebbar ist.

Aus der DE 1 430 293 A ist des Weiteren eine Schwenkhebelanordnung bekannt, um einen kompletten Fahrersitz durch eine Schwenkbewegung in verschiedene Sitzpositionen überzuführen.

Die EP 2 128 000 A offenbart eine Fahrzeugtragstruktur mit zwei Längsträgern, die im Wesentlichen in Fahrzeuglängsrichtung erstreckt sind. Die Längsträger sind im Frontbereich in einer gemeinsamen Ebene in einem spitzen Winkel zu einer Fahrzeuglängsachse miteinander verlaufend gestaltet. Der Fahrer kann eine Mittelsitzposition einnehmen.

Der Erfindung liegt die Aufgabe zugrunde, bei Fahrzeugen mit einer Mittelsitzposition die Ein- und Ausstiegsverhältnisse zu verbessern.

Diese Aufgabe wird bei einem Fahrzeug mit einer Mittelsitzposition durch eine Schwenkvorrichtung gelöst, welche zumindest eine Sitzfläche eines Fahrersitzes aufnimmt und zumindest die Sitzfläche aus einer Mittelsitzposition in eine Zugänglichkeitsposition zur Fahrgastzelle so verfährt, welche nahe oder benachbart von zumindest einer seitlichen Tür vorgesehen und entgegen der Fahrtrichtung zurückversetzt ist. Dadurch werden die Ein- und Ausstiegsverhältnisse wesentlich verbessert, da zumindest die Sitzfläche ausgehend von der Mittelsitzposition an oder neben der zumindest einen seitlichen Tür positioniert ist und der Fahrer in ergonomisch günstiger Weise ein- und aussteigen kann. Diese zumindest mittels der Schwenkvorrichtung aus der Mittelposition in die Zugänglichkeitsposition verfahrbare Sitzfläche weist des Weiteren den Vorteil auf, dass die Sitzfläche in Richtung auf die Tür weisend teilweise gedreht ist, so dass ein gesundheitsschonendes Ein- und Aussteigen ermöglicht wird, da eine reduzierte Körperdrehung des Fahrers zum Ein-und Aussteigen erforderlich ist. Des Weiteren weist die Schwenkvorrichtung den Vorteil auf, dass die Mittelsitzposition gegenüber einer herkömmlichen Sitzposition weiter nach vorne in Richtung A-Säule versetzt werden kann und dennoch eine gute Zugänglichkeit zur Fahrgastzelle gegeben ist.

Bevorzugt ist die zumindest eine Sitzfläche durch die Schwenkvorrichtung entlang einer Kreisbahn geführt. Dadurch kann eine gesicherte und kontrollierte Schwenkbewegung der Sitzfläche von der Mittelsitzposition in die Zugänglichkeitsposition und zurück geschaffen sein, welche einfach durch den Fahrer durchgeführt werden kann.

Des Weiteren ist die Sitzfläche bevorzugt durch die Schwenkvorrichtung um einen festen Drehpunkt innerhalb der Fahrgastzelle verfahrbar geführt. Dadurch lässt sich ein kontinuierlicher Schwenkradius für die Sitzfläche schaffen, wodurch die Verfahrbewegung entlang der Schwenkvorrichtung vereinfacht ist.

Die Kreisbahn der Schwenkvorrichtung erstreckt sich bevorzugt von der Fahrzeuglängsmittelachse bis zumindest einer seitlichen Tür, vorzugsweise zwischen den beiden seitlichen Türen, der Fahrgastzelle. Dadurch kann der Fahrer wie gewohnt aus dem Fahrzeug mit der Mittelsitzposition, wie bei einem Rechts- oder Linkslenker, aussteigen, wobei zusätzlich der Vorteil gegeben ist, dass die Sitzfläche in Ausstiegsrichtung aufgrund der Schwenkvorrichtung leicht gedreht ist und dadurch ein Hinaus- und Hineindrehen des Fahrers beim Ein- und Aussteigen verringert wird. Dies schont die Wirbelsäule und den Beckengelenkbereich des Fahrers.

Die Schwenkvorrichtung umfasst bevorzugt zumindest eine Führungsschiene, entlang der ein die Sitzfläche aufnehmender Schlitten verfahrbar geführt ist. Eine solche Anordnung ermöglicht einen konstruktiv einfachen Aufbau. Zudem kann eine leichte Verfahrbewegung der Sitzfläche zur Führungsschiene erzielt werden.

Bevorzugt ist die zumindest eine Führungsschiene an einer Führungskonsole vorgesehen, welche sich zwischen zwei Längsträgern der Fahrzeugtragstruktur erstreckt. Dies ermöglicht nicht nur die maximale Ausnutzung eines Schwenkbereichs innerhalb der Fahrgastzelle, sondern dient gleichzeitig zur Verbesserung der Biege- und/oder Torsionssteifigkeit der Fahrzeugtragstruktur, insbesondere der Bodengruppe.

Der Schlitten wird vorteilhafterweise mit Laufrollen oder Gleitelementen entlang der zumindest einen Führungsschiene geführt. Dadurch ist ein einfacher und konstruktiver Aufbau ermöglicht, der aufgrund der Verwendung von Laufrollen oder Gleitelementen, welche Massenartikel sind, kostengünstig ist. Gleichzeitig ist eine solche Schwenkvorrichtung bei einer Verfahrbewegung geräuscharm.

Des Weiteren sind bevorzugt zwei konzentrisch verlaufende Führungsschienen an der Fahrersitzkonsole vorgesehen, durch welche drei einander zugeordnete oder wenigstens paarweise einander zugeordnete und am Schlitten gelagerte Laufrollen geführt sind. Dies stellt einen konstruktiv einfachen Aufbau dar und sichert den Schlitten gegen Verdrehen zu den Führungsschienen.

Die an dem Schlitten einander gegenüberliegend angeordneten Laufrollen sind in einem Winkel zwischen 1° und 80°, vorzugsweise 1° bis 45°, aufeinander zugeneigt angeordnet. Dadurch kann der Schlitten mittels der Laufrollen abhebesicher zu den Führungsschienen geführt werden. Zusätzlich kann dadurch eine vibrationsarme Aufnahme des Schlittens beziehungsweise der Sitzfläche zur Führungsschiene erfolgen.

An der Sitzfläche oder dem Schlitten der Schwenkvorrichtung ist bevorzugt ein Verriegelungselement vorgesehen, durch welches der Schlitten oder die Sitzfläche in der Mittelposition und/oder der Zugänglichkeitsposition arretierbar ist. Dadurch kann während dem Fahren mit dem Fahrzeug gesichert die Mittelsitzposition eingenommen werden. Des Weiteren kann beim Ein- und Aussteigen durch die Arretierung die Zugänglichkeitsposition gesichert sein, dass die Sitzfläche nicht versehentlich verschwenkt wird.

In der Fahrgastzelle ist eine Zentralsäule vorgesehen, welche sich von einem Fahrzeugboden der Fahrzeugtragstruktur bis zu einem Dach, insbesondere einem Dachquerträger, der Fahrgastzelle erstreckt. Eine solche Zentralsäule dient für eine materialsparende Versteifung der Sicherheitsstruktur in verschiedenen Karosserieaufbauten.

Die Zentralsäule ist in einer Mittelsitzposition angeordnet und trägt die Rückenlehne. Dadurch ist für den Fahrer in der Mittelsitzposition quasi ein Fahrzeugkäfig gebildet. Vorteilhafterweise ist zwischen der Rückenlehne und der Zentralsäule eine Verstellvorrichtung vorgesehen. Dadurch lassen sich unterschiedliche Sitzpositionen für den Fahrer in Abhängigkeit seiner Größe einstellen. Bevorzugt ist die Verstellvorrichtung als eine parallelogrammartige Verstellvorrichtung vorgesehen, so dass paarweise einander zugeordnete Streben sowohl in einem Schulterbereich als auch in einem Lendenbereich der Rückenlehne angreifen. Dadurch wird die Rückenlehne beim Einstellen aus einer Position nahe der Zentralsäule für eine große Person in eine Sitzposition für eine kleine Person nicht nur in Fahrtrichtung nach vorne bewegt, sondern gleichzeitig auch in Richtung auf die Sitzfläche nach unten zubewegt. Zudem können an der Zentralsäule neben der Rückenlehne auch die Rückhalte- und Gurtsysteme und/oder Kopfstützvarianten vorgesehen sein. Des Weiteren kann bevorzugt an der Zentralsäule, insbesondere entlang dem Seitenrand der Zentralsäule, und in Richtung auf die Fondsitze zugerichtet jeweils ein Airbagsystem vorgesehen sein, so dass auch die im Fond sitzenden Passagiere im Falle eines Aufpralls geschützt sind.

Des Weiteren ist die Zentralsäule bevorzugt in einer Mittelposition angeordnet, an welcher Infotainment-Systeme für Fondpassagiere vorgesehen sind. Ebenso können Trennwandsysteme zur Absperrung eines dahinter liegenden Laderaumes in der Zentralsäule aufgenommen sein. Dabei kann das Trennwandsystem sowohl durch seitliche, insbesondere einzeln ausfahrbare Rollos oder Absperrelemente, wie beispielsweise ein Netz, gebildet werden. Ebenso kann ein solches Rollo oder Netz auch vertikal von oben nach unten oder von unten nach oben verfahren werden, insbesondere dann, wenn ein dahinterliegender Laderaum gegenüber der Fahrgastzelle zu trennen ist. Des Weiteren können an der Zentralsäule Einbausysteme in einem dahinter angeordneten Laderaum befestigt sein.

Gemäß einer alternativen Ausführungsform sind die Sitzfläche und die Rücklehne gemeinsam mit der Schwenkvorrichtung verfahrbar. Dabei kann der gesamte Sitz mittels der Schwenkvorrichtung über die beispielsweise vorbeschriebene Führungsschiene mit dem daran angeordneten Schlitten verfahrbar sein.

Bevorzugt kann der an der Schwenkvorrichtung angeordnete Sitz mit einem Schwenkarm verbunden sein, der um einen festen Drehpunkt in der Fahrzeugtragstruktur, insbesondere in der Fahrzeuglängsmittelachse der Fahrzeugtragstruktur, schwenkbar gelagert ist.

Gemäß einer weiteren bevorzugten Ausgestaltung der Erfindung weist die Fahrzeugtragstruktur zwei seitliche Längsträger und zumindest einen Querträger auf, die eine bootsförmige Kontur bilden, indem die Längsträger frontseitig eine Bugspitze bilden und heckseitig mit einem Querträger verbunden sind, wobei nahe der Bugspitze eine Vorderachse von der Fahrzeugtragstruktur aufgenommen ist, so dass ein bugseitiger Fußraum für die Mittelsitzposition zwischen zwei Radhäusern der Vorderräder der Fahrzeuges vorgesehen ist. Diese Fahrersitzposition innerhalb der Fahrgastzelle weist den Vorteil auf, dass der Fußraum innerhalb einer crash-sicheren Boden-, Rahmen- und Karosseriestruktur liegt. Dennoch können durch die Schwenkvorrichtung die Ein- und Ausstiegsverhältnisse begünstigt werden.

Des Weiteren ist bevorzugt zumindest die Schwenkvorrichtung entlang einer Kreisbahn mit einem Radius verfahrbar, bei der zumindest die Sitzfläche eine in einer zur zumindest einen Tür gedrehten Zugänglichkeitsposition und gegenüber der Mittelposition bezogen auf eine A-Säule der Fahrgastzelle in Richtung Fond zurückversetzte Position einnimmt. Dadurch kann einerseits ein bequemes Ein-und Aussteigen ermöglicht sein und andererseits der Fußraum in der Mittelposition zwischen den Radhäusern liegen.

Die Schwenkvorrichtung ist bevorzugt aus der Mittelsitzposition um 10° bis 50°, vorzugsweise 20° bis 40°, seitlich nach außen verschwenkbar. Dadurch kann ein schnelleres und rationelleres - also zeit- und damit kostensparendes - Ein-und Aussteigen, insbesondere bei gewerblichen Fahrern, ermöglicht sein.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine Ansicht von oben auf ein Fahrzeug mit einer Mittelsitzposition,
Figur 2 eine schematische Ansicht des Fahrzeugs von oben gemäß Figur 1 mit einem Fahrersitz in einer Zugänglichkeitsposition,
Figur 3 eine schematische Seitenansicht einer alternativen Ausführungsform des Fahrzeugs zu Figur 1,
Figur 4 eine schematische Ansicht auf eine alternative Ausführungsform des Fahrersitzes zu Figur 1,
Figur 5 eine perspektivische Ansicht einer Schwenkvorrichtung für den Fahrersitz gemäß Figur 4,
Figur 6 eine schematische Seitenansicht eines Schlittens der Schwenkvorrichtung gemäß Figur 5, und
Figur 7 eine schematische Ansicht von oben auf ein alternatives Fahrzeug zu Figur 1.

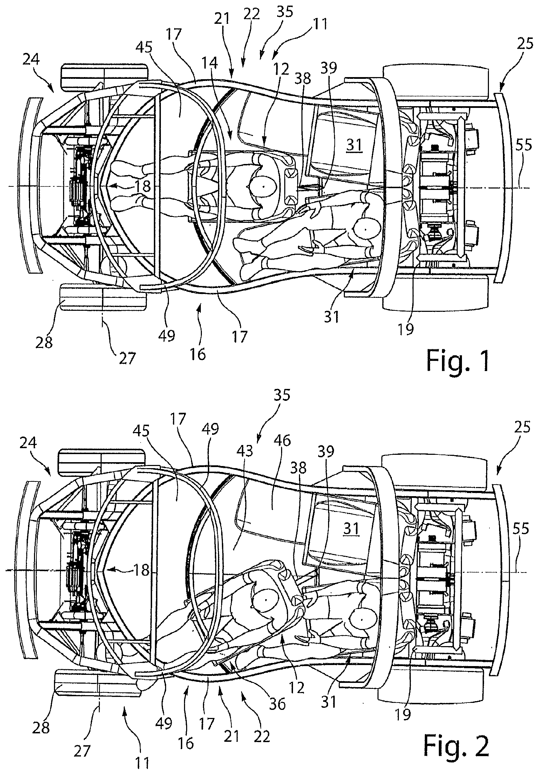

In Figur 1 ist ein Fahrzeug 11 schematisch von oben dargestellt, wobei einzelne Karosserieaufbauten zur Wahrung der Übersichtlichkeit nicht dargestellt sind. Dieses Fahrzeug 11 ist bevorzugt ein Elektrofahrzeug. Dieses Fahrzeug 11 umfasst einen Fahrersitz 12, der in einer Mittelsitzposition 14 angeordnet ist. Das Fahrzeug 11 weist eine Fahrzeugtragstruktur 16 auf, welche eine bootsförmige Kontur umfasst. Zwei Längsträger 17 sind frontseitig zu einer Bugspitze 18 zusammengeführt. Heckseitig ist zwischen den beiden Längsträgern 17 zumindest ein Querträger 19 angeordnet. Die Längsträger 17 weisen ausgehend von der Bugspitze 18 eine jeweils seitlich nach außen weisende Krümmung 21 auf, bevor diese heckseitig in parallel verlaufende Abschnitte übergehen. Im Bereich der Krümmung 21 ist eine Fahrgastzelle 22 vorgesehen, in welcher der Fahrersitz 12 in der Mittelsitzposition 14 angeordnet ist. Dabei kann der Fahrersitz 12 in dieser Längsmittelachse 55 der Fahrzeugstruktur 16 oder seitlich versetzt, jedoch näher zur Längsmittelsachse als zu einer seitlichen Tür, positioniert sein.

Das Fahrzeug 11 weist eine Vorbaustruktur 24 auf, welche wie auch eine Heckstruktur 25 vorzugsweise modulartig aufgebaut ist und einen Vorbau mit Stoßfänger, insbesondere mit energieabsorbierenden Deformationselementen, aufweist. Nahe der Bugspitze 18 ist eine Vorderachse 27 des Fahrzeuges 12 vorgesehen und von der Fahrzeugstruktur 16 aufgenommen. Dadurch liegt eine Bugspitze 18 zwischen nicht näher dargestellten Radhäusern, welche die Vorderräder 28 umgeben.

Im Hinblick auf den Aufbau und die Ausgestaltungsmöglichkeiten der Fahrzeugtragstruktur 16 wird auf die EP 2 128 000 A1 vollumfänglich Bezug genommen.

Das Fahrzeug 11 gemäß Figur 1 ist beispielsweise als Dreisitzer ausgebildet. Im Fond der Fahrgastzelle 22 sind zwei weitere Sitze 31 beispielsweise vorgesehen. Im Bereich der größten Krümmung 21 sind jeweils seitliche Türen vorgesehen, die nicht näher dargestellt sind, über welche die Passagiere Zugang zur Fahrgastzelle 22 haben.

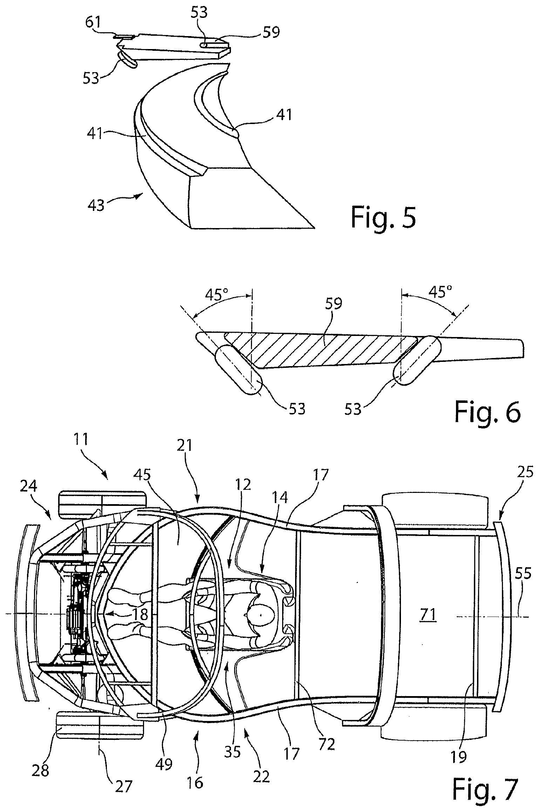

Zum Ein- und Aussteigen für den Fahrer kann der Fahrersitz 12 mit einer Schwenkvorrichtung 35 aus der Mittelsitzposition 14 gemäß Figur 1 in eine Zugänglichkeitsposition 36 gemäß Figur 2 geschwenkt werden. Dadurch wird der Fahrersitz 12 nahe dem seitlichen Längsträger 17 positioniert, wie dies in Figur 2 dargestellt ist, so dass ein bequemes Ein- und Aussteigen ermöglicht ist. Die Schwenkvorrichtung 35 umfasst einen schwenkbaren Fahrersitz 12, der an einem Schwenkarm 38 um einen fest zur Fahrzeugtragstruktur 16 vorgesehenen Drehpunkt 39 schwenkbar ist. Der schwenkbare Fahrersitz 12 ist entlang einer Führungsschiene 41, vorzugsweise mit einem Schlitten, der beispielsweise in den Figuren 5 und 6 näher dargestellt ist, verfahrbar geführt. Diese Führungsschiene 41 erstreckt sich vorteilhafterweise zwischen den beiden Längsträgern 17. Diese Führungsschiene 41 ist an einer Führungskonsole 43 vorgesehen, welche gegenüber einem Fußraum 45 für den Fahrer und/oder einen Fußraum 46 für die Fondpassagiere erhöht ist. Diese Führungskonsole 43 nimmt gleichzeitig den Fahrersitz 12 auf, so dass dieser sich darauf während der Verfahrbewegung abstützt.

Innerhalb der Fahrzeugtragstruktur 16 beziehungsweise zwischen den Längsträgern 17 ist eine Bodenbaugruppe vorgesehen, welche eine nicht näher dargestellte Bodenplatte umfasst, die beispielsweise den Fußraum 45, 46 nach unten abgrenzt. Zwischen der Bodenplatte und der Führungskonsole 43 können Akkumulatoren oder sonstige Antriebe, Steuerungen oder dergleichen für das Fahrzeug 11 verstaut sein.

Bei der in Figur 1 dargestellten Mittelsitzposition 14 erstreckt sich der Fußraum 45 für den Fahrer weit gegenüber einer A-Säule 49 zur Vorbaustruktur 24. Durch die seitliche Schwenkbewegung des Fahrzeugs 12 mit der Schwenkvorrichtung 35, welche vorzugsweise zwischen 20° bis 45° umfasst, kann die Sitzposition des Fahrers in einer Zugänglichkeitsposition 36 zum Ein- und Aussteigen gegenüber der A-Säule 49 nach hinten versetzt werden, wodurch ein einfacheres Ein- und Aussteigen ermöglicht ist.

Bei dieser Ausgestaltung der Schwenkvorrichtung 35, welche den gesamten Fahrersitz 12 aufnimmt, sind an dem gesamten Fahrersitz 12 sowohl die Rückhalte- und Gurtsysteme als auch Kopfstützen angeordnet.

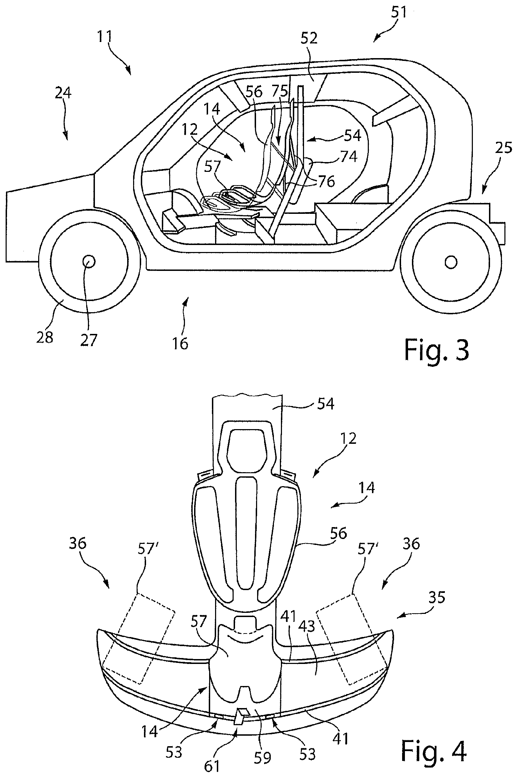

In Figur 3 ist eine schematische Seitenansicht einer alternativen Ausführungsform des Fahrzeugs 11 zu den Figuren 1 und 2 dargestellt. Der Aufbau der Fahrzeugtragstruktur 16 entspricht dem Fahrzeug 12 gemäß den Figuren 1 und 2. Ergänzend ist hierbei zwischen einem Dach 51, insbesondere einem Dachquerträger 52, und einer Bodenbaugruppe oder der Bodenplatte oder der Führungskonsole 43 eine Zentralsäule 54 vorgesehen. Diese Zentralsäule 54 kann eingeschweißt oder lösbar verschraubt sein. Die Zentralsäule 54 kann auch an dem Dachquerträger 52 und/oder an der Bodenbaugruppe und/oder Führungskonsole 43 zur Seite des Fahrzeugs 11 verfahrbar angeordnet sein. Die Zentralsäule 54 kann analog zur Sitzfläche verfahrbar sein. Zumindest ist eine Verfahrbewegung aus einer Mittelposition in eine Zugänglichkeitsposition 36 nahe einer Tür vorgesehen. An der Zentralsäule 54 kann zumindest ein Infotainement-System vorgesehen sein, welches wahlweise zu dem jeweiligen Fondsitz 31 positionierbar ist. Bei einer verfahrbaren Zentralsäule 54 kann die Rückenlehne 56 an einer eigenständigen Zentralsäule 54 oder an der Führungskonsole 43, der Bodenbaugruppe oder dem Dachträger 52 befestigt sein. Die Zentralsäule 54 kann konstruktiv analog zu dem Längsträger 17 oder Querträger 19 aufgebaut sein. Dadurch ist eine stabile Verbindung zischen dem Fahrzeugboden oder der Führungskonsole 43 und dem Dachquerträger 53 ermöglicht. Die Zentralsäule 54 ist bevorzugt in einer Längsmittelachse 55 des Fahrzeugs 11 positioniert, so dass der Fahrersitz 12 in einer Mittelsitzposition 14 angeordnet ist.

Dieses in Figur 3 dargestellte Fahrzeug 11 kann ebenfalls als dreisitziges Fahrzeug ausgebildet sein. In Abhängigkeit der Ausgestaltung des Hecks können im Fondbereich auch noch weitere Passagiere transportiert werden. Bei der Anordnung von Sitzen 31 im Fondbereich können an der Zentralsäule 15 rückseitig bevorzugt Infotainment-Systeme angeordnet sein. Zusätzlich können an der Zentralsäule 54 Airbagsysteme 74 angeordnet sein, welche zum Schutz für die Passagiere im Fondbereich ausgerichtet sind.

Der Fahrersitz 12 ist bei dieser alternativen Ausführungsform abweichend zu dem in den Figuren 1 und 2 beschriebenen Fahrersitz zweiteilig ausgestaltet. Eine Rückenlehne 56 ist fest an der Zentralsäule 54 angeordnet. Bevorzugt entspricht die Breite der Zentralsäule 54 zumindest bereichsweise einer Breite der Rückenlehne 56. Die Sitzfläche 57 kann gegenüber der Rückenlehne 56 verfahren werden und ist von der Schwenkvorrichtung 35 aufgenommen. Die Sitzfläche 57 ist durch eine Schwenkbewegung der Schwenkvorrichtung 35 in die Zugänglichkeitsposition 36 zur seitlichen Tür positionierbar. Dies ist beispielsweise in Figur 4 durch die strichliniert dargestellten Sitzflächen 57' verdeutlicht. An der Zentralsäule 54 kann auch eine Kopfstütze befestigt sein. Ebenso ist auch das Rückhalte- und Gurtsystem an der Zentralsäule 54 befestigt. Des Weiteren ist zwischen der Rückenlehne 56 und der Zentralsäule 54 eine Verstelleinrichtung 75 vorgesehen, um die Position der Rückenlehne 56 zum Lenkrad auf unterschiedliche Größen der Fahrer einzustellen. Die Verstellvorrichtung 75 ist beispielsweise nach Art eines Parallelogramms aufgebaut, so dass zwischen der Rückenlehne 56 und der Zentralsäule 54 zwei paarweise einander zugeordnete Streben vorgesehen sind, wobei ein erstes Paar der Streben 76 im Schulterbereich der Rückenlehne 56 und ein zweites Paar der Streben 76 im Beckenbereich der Rückenlehne 56 angreift. Dadurch kann neben einer Bewegung der Rückenlehne 56 in Fahrtrichtung auch gleichzeitig eine Schwenkbewegung der Rückenlehne 56 nach unten auf die Sitzfläche 57 erzielt werden. Die Sitzfläche 57 ist zum Schlitten 59 mittels einer Fahrschiene verbunden, so dass die Sitzfläche 57 in und entgegen der Fahrzeuglängsmittelachse 55 verfahrbar ist.

Bei dieser Ausführungsform umfasst die Schwenkvorrichtung 35 einen Schlitten 59, der entlang der zumindest einen Führungsschienen 41, insbesondere an der Führungskonsole 43, verfahrbar ist. Zur Sicherung einer Mittelsitzposition 14 und/oder der Zugänglichkeitsposition 46 ist an einem Schlitten 59 der Schwenkvorrichtung 35 und/oder an der Sitzfläche 57 ein Verriegelungselement 61 vorgesehen, welches an der Führungskonsole 43 angreift und die jeweilige Position sichert.

In Figur 5 ist perspektivisch eine seitliche Ansicht der Schwenkvorrichtung 35 dargestellt. Die Figur 6 zeigt eine Seitenansicht des Schlittens 59. An der Führungskonsole 43 sind zwei konzentrisch verlaufende Führungsschienen 41 vorgesehen. In diesen Führungsschienen 41 sind Laufrollen 63 verfahrbar geführt, welche an dem Schlitten 59 befestigt sind. Bevorzugt sind die Laufrollen 53 in einem Winkel zwischen 1° und 45° geneigt und zueinander ausgerichtet, so dass die Laufrollen 53 während des Eingriffs in die Führungsschienen 41 eine Abhebesicherung des Schlittens 59 zur Führungskonsole 43 bilden. Die Laufrollen 53 sind bevorzugt aus Kunststoff oder Gummi ausgebildet. Dies weist den Vorteil auf, dass sie leicht laufen. Darüber hinaus ist die Verfahrbewegung leise. Zudem kann eine Vibrationsdämpfung ermöglicht sein. Alternativ zu den Laufrollen können beispielsweise auch Gleitelemente 57 vorgesehen sein. Zwischen dem Schlitten 59 und der Sitzfläche 57 kann ein Sitzflächenverstellmechanismus vorgesehen sein, um die Position des Fahrersitzes längs der Längsmittelachse 55 einzustellen. An dem Schlitten 59 sind bevorzugt an einer in Fahrtrichtung weisenden Stirnseite zwei benachbarte Laufrollen 53 vorgesehen, wobei in einer zum Fond ausgerichtete Führungsschiene 41 nur eine am Schlitten 59 angeordnete Laufrolle 53 eingreift. Dadurch kann eine statisch bestimmte Dreipunktlagerung des Schlittens 59 erfolgen. Zudem kann dabei die innere beziehungsweise zum Fond ausgerichtete Führungsschiene 41 kürzer ausgebildet sein, wodurch die Führungskonsole 43 schmäler wird. Dadurch kann sich der Fußraum im Fond vergrößern.

Alternativ können an dem Schlitten 59 zwei paarweise einander gegenüberliegende Laufrollen 53 vorgesehen sein, um den Schlitten 59 zu führen.

In Figur 7 ist eine Ansicht von oben auf eine alternative Ausführungsform des Fahrzeugs 11 in Figur 3 dargestellt. Anstelle eines Passagierfahrzeuges, bei dem im Fond beispielsweise zwei Sitze 31 vorgesehen sind, ist ein Transportfahrzeug dargestellt, an welchem sich rückseitig an die Zentralsäule 54 ein Laderaum 71 anschließt. Zur Sicherung der Fahrgastzelle 22 kann an der Zentralsäule 54 ein Trennwandsystem 72 angeordnet sein. Ebenso kann eine Laderaumsicherung, wie beispielsweise ein Netz, vorgesehen sein. Zusätzlich können in dem Laderaum 71 Nutzraum-Einbausysteme vorgesehen sein. Insbesondere kann ein solches Fahrzeug 11 bei der Auslieferung von Paketen Einsatz finden, wodurch dem Fahrer ermöglicht wird, bedarfsmäßig rechts als auch links auszusteigen.

Aus den Figuren 1 und 7 wird ersichtlich, dass die Mittelsitzposition 14, welche sich aufgrund des zwischen den Radhäusern erstreckenden Fußraumes 45 in Richtung Vorderachse 27 gegenüber herkömmlichen Fahrzeugen versetzt ist, die Nutzraumrelation verbessert ist. Bei der Nutzraum-Relation handelt es sich um das Verhältnis des Vorbaus mit Fahrerraum zu der verbleibenden Nutzraumlänge bei gleichbleibender beziehungsweise begrenzter Außenlänge von Fahrzeugen. Dies wird bei der vorliegenden Mittelsitzposition 14 zugunsten des Nutzraums verbessert. Durch die Schwenkvorrichtung 35 ist das Ein- und Aussteigen dennoch ergonomisch und komfortseitig begünstigt. Beispielsweise kann die Mittelsitzposition 14 gegenüber herkömmlichen Positionen eines Fahrersitzes gegenüber der A-Säule um mehr als 100 mm in Richtung auf die Vorderachse 27 nach vorne versetzt angeordnet werden. Dadurch wird bei Sitzen 31 im Fondbereich die Beinfreiheit für die Passagiere im Fond vergrößert. Bei Nutzfahrzeugen wird dadurch ein erhöhtes Ladevolumen bezüglich einer Laderaumlänge von mehr als 100 mm erzielt.

Die Mittelposition 14, welche gegenüber der Fahrersitzposition bei herkömmlichen Fahrzeugen weiter nach vorne gerückt ist, kann derart vorgesehen sein, dass eine Sitzkissenvorderkante der Sitzflächen 57 mit einer Hinterkante der A-Säule des Fahrzeugs annähernd deckungsgleich ist oder im Bereich der A-Säule liegt. Dies beruht darauf, dass bei Elektrofahrzeugen, wie diese vorzugsweise in den Zeichnungen dargestellt sind, sich der Fußraum bis an die Vorderachse 27 erstrecken kann. Solche Elektrofahrzeuge sind als Unterflurfahrzeuge vorgesehen, so dass die Elektromotoren unterhalb der Bodenplatte oder Bodengruppe oder im Eckbereich oder auch im Bereich der Führungskonsole angeordnet sein können.

Auch bei der Ausführungsform eines Fahrzeugs gemäß den Figuren 1 und 2 kann eine Zentralsäule 54 vorgesehen sein. Diese Zentralsäule 54 weist dann im unteren Anschlussbereich zur Bodenplatte eine Aussparung auf, durch welche sich der Schwenkarm erstreckt und innerhalb der der Schwenkarm 38 eine seitliche Verfahrbewegung durchführen kann, sofern die Mittelsitzposition 14 verlassen und eine der beiden Zugänglichkeitspositionen 36 eingenommen wird.

## Patentansprüche

1. Fahrzeug mit einer Fahrzeugtragstruktur (16), mit einer auf der Fahrzeugtragstruktur (16) angeordneten Fahrgastzelle (22), welche durch Karosserieaufbauten zumindest teilweise umgeben ist und mit zumindest einer in Fahrtrichtung gesehen seitlichen, der Fahrgastzelle zugeordneten Tür für die Zugänglichkeit zur Fahrgastzelle, mit einem Fahrersitz (12), der zumindest eine Sitzfläche (57) und eine Rückenlehne (56) umfasst, und der in einer Mittelsitzposition (14) angeordnet ist, in welcher der Fahrersitz (12) in einer Fahrzeuglängsmittelachse (55) oder nahe der Fahrzeuglängsmittelachse (55) der Fahrzeugstruktur (16) positioniert ist und zumindest die Sitzfläche (57) des Fahrersitzes (12) mit einer Schwenkvorrichtung (35) aus einer Mittelsitzposition (14) in eine Zugänglichkeitsposition (36) zur Fahrgastzelle (22) nahe oder benachbart der zumindest einen seitlichen Tür verfahrbar ist, welche gegenüber der Mittelsitzposition (14) entgegen der Fahrtrichtung zurückversetzt ist, **dadurch gekennzeichnet, dass** in der Fahrgastzelle (22) eine Zentralsäue (54) vorgesehen ist, welche sich von einem Fahrzeugboden oder einer Bodenbaugruppe der Fahrzeugtragstruktur (16) bis zum Dach (51) der Fahrgastzelle (22) erstreckt und dass die Zentralsäule (54) in der Mittelsitzposition (14) angeordnet ist und die Rückenlehne (56) des Fahrersitzes (12) trägt.

2. Fahrzeug nach Anspruch 1, **dadurch gekennzeichnet, dass** die Sitzfläche (57) durch die Schwenkvorrichtung (35) entlang einer Kreisbahn geführt verfahrbar ist.

3. Fahrzeug nach Anspruch 1, **dadurch gekennzeichnet, dass** die Sitzfläche (57) durch die Schwenkvorrichtung (35) um einen festen Drehpunkt (39), vorzugsweise innerhalb der Fahrgastzelle (22), verfahrbar ist.

4. Fahrzeug nach einem der vorhergehenden Ansprüche, **dadurch gekennzeichnet, dass** sich die Kreisbahn der Schwenkvorrichtung (35) von der Fahrzeuglängsmittelachse (55) bis zumindest einer seitlichen Tür, vorzugsweise zu beiden seitlichen Türen, erstreckt.

5. Fahrzeug nach einem der vorhergehenden Ansprüche, **dadurch gekennzeichnet, dass** die Schwenkvorrichtung (35) zumindest eine Führungsschiene (41) aufweist, entlang der ein die zumindest die Sitzfläche (57) aufnehmender Schlitten (59) verfahrbar geführt ist, vorzugsweise dass die zumindest eine Führungsschiene (41) an einer Führungskonsole (43) vorgesehen ist, welche sich zwischen zwei Längsträgern (17) der Fahrzeugtragstruktur (16) erstreckt.

6. Fahrzeug nach Anspruch 5, **dadurch gekennzeichnet, dass** der Schlitten (59) mit Laufrollen (63) oder Gleitelementen entlang der Führungsschienen (41) verfahrbar ist.

7. Fahrzeug nach Anspruch 5 oder 6, **dadurch gekennzeichnet, dass** zwei konzentrisch verlaufende Führungsschienen (41) entlang der Kreisbahn an der Führungskonsole (43) vorgesehen sind.

8. Fahrzeug nach Anspruch 7, **dadurch gekennzeichnet, dass** drei einander zugeordnete Laufrollen (63) des Schlittens (49) oder paarweise einander zugeordnete Laufrollen (63) des Schlittens (49) an den Führungsschienen (41) eingreifen.

9. Fahrzeug nach einem der Ansprüche 6 bis 8, **dadurch gekennzeichnet, dass** die an dem Schlitten (59) paarweise einander zugeordneten und einander gegenüberliegende Laufrollen (53) in einem Winkel zwischen 1° bis 80°, vorzugsweise zwischen 1° und 45°, aufeinander zugeneigt angeordnet sind.

10. Fahrzeug nach einem der vorhergehenden Ansprüche, **dadurch gekennzeichnet, dass** an der Sitzfläche (57) und/oder dem Schlitten (59) ein Verriegelungselement (61) vorgesehen ist, durch welches zumindest die Sitzfläche (57) in der Mittelsitzposition (14) und/oder der Zugänglichkeitsposition (36) arretiert ist.

11. Fahrzeug nach Anspruch 1, **dadurch gekennzeichnet, dass** zumindest zwischen der Rückenlehne (56) und der Zentralsäule (54) eine Verstellvorrichtung (75) vorgesehen ist.

12. Fahrzeug nach Anspruch 1, **dadurch gekennzeichnet, dass** die Zentralsäule (54) in der Mittelsitzposition (14) angeordnet ist, an welcher rückseitig ein Trennwandsystem (72) für einen dahinterliegenden Laderaum (71) oder eine Laderaumsicherung oder ein Einbausystem befestigt ist.

13. Fahrzeug nach einem der vorhergehenden Ansprüche, **dadurch gekennzeichnet, dass** die Fahrzeugtragstruktur (16) zwei seitliche Längsträger (17) und zumindest einen Querträger (19) aufweist, die eine bootsförmige Kontur bilden, in der die Längsträger (17) frontseitig eine Bugspitze (18) bilden und heckseitig mit dem zumindest einen Querträger (19) verbunden sind, wobei nahe der Bugspitze (18) eine Vorderachse (27) von der FahrzeugTragstruktur (16) aufgenommen ist, so dass ein bugseitiger Fußraum (45) für die Mittelsitzposition (14) des Fahrers zwischen zwei Radhäusern der Vorderräder (28) vorgesehen ist.

14. Fahrzeug nach einem der vorhergehenden Ansprüche, **dadurch gekennzeichnet, dass** zumindest die Sitzfläche (57) durch die Schwenkvorrichtung (35) entlang einer Kreisbahn mit einem Radius verfahrbar ist, bei der die Sitzfläche (57) in einer der zumindest einen Tür zugedrehten Zugänglichkeitsposition (36) und gegenüber der Mittelposition (14) bezogen auf eine A-Säule (49) der Fahrgastzelle (52) in Richtung Fond zurückversetzt ist.

15. Fahrzeug nach einem der vorhergehenden Ansprüche, **dadurch gekennzeichnet, dass** die Schwenkvorrichtung (35) einen Schwenkbereich aufweist, innerhalb dem zumindest die Sitzfläche (57) aus einer Mittelsitzposition (14) um 10° bis 50°, vorzugsweise 20° bis 40°, seitlich nach außen verschwenkbar ist.

## Claims

1. A vehicle having a vehicle support structure (16), having a passenger compartment (22) which is disposed on said vehicle support structure (16) and is at least partially surrounded by body shell constructions, and having at least one door associated with the passenger compartment and arranged laterally when considered in the direction of travel so as to yield access to the passenger compartment, having a driver's seat (12) which comprises at least a seat bottom (57) and a seat back (56) and is disposed in a central seat position (14) in which said driver's seat (12) is positioned in a vehicle median longitudinal axis (55) or close to said vehicle median longitudinal axis (55) of said vehicle support structure (16) and in which for permitting access to the passenger compartment (22) at least the seat bottom (57) of the driver's seat (12) may be transferred, using a pivoting device (35), from a central seat position (14) to an access position (36) close to, or adjacent to, said at least one side door, which position is backwardly offset with respect to the central seat position (14) in a direction opposite to the direction of travel, **characterised in that** a central column (54) is provided within the passenger compartment (22) and extends from the vehicle floor or from an underbody module of the vehicle support structure (16) up to the roof (51) of the passenger compartment (22) and **in that** the central column (54) is disposed in the central seat position (14) and supports the seat back (56) of the driver's seat (12).

2. The vehicle as claimed in claim 1, **characterised in that** the seat bottom (57) is guided so as to be displaceable, via the pivoting device (35), along a circular path.

3. The vehicle as claimed in claim 1, **characterised in that** via the pivoting device (35), the seat bottom (57) is displaceable about a fixed pivotal point (39), preferably within the passenger compartment (22).

4. The vehicle as claimed in any of the preceding claims, **characterised in that** the circular path of the pivoting device (35) extends from the vehicle median longitudinal axis (55) to at least one side door, preferably to both side doors.

5. The vehicle as claimed in any of the preceding claims, **characterised in that** the pivoting device (35) has at least one guide rail (41) along which a carriage (59) receiving the at least one seat bottom (57) is displaceably guided, preferably **in that** the at least one guide rail (41) is provided on a guide console (43) which extends between two longitudinal members (17) of the vehicle support structure (16).

6. The vehicle as claimed in claim 5, **characterised in that** the carriage (59) is displaceable along the guide rails (41) by means of rollers (63) or sliding members.

7. The vehicle as claimed in claim 5 or 6, **characterised in that** two concentrically extending guide rails (41) are provided along the circular path on the guide console (43).

8. The vehicle as claimed in claim 7, **characterised in that** three rollers (63) of the carriage (49) associated with each other, or rollers (63) of the carriage (49) associated with each other in pairs become engaged with the guide rails (41).

9. The vehicle as claimed in any one of claims 6 to 8, **characterised in that** the rollers (53) which are associated with each other in pairs and arranged opposite to each other on the carriage (59) are disposed such as to be inclined with respect to each other at an angle of between 1° and 80°, preferably between 1° and 45°.

10. The vehicle as claimed in any of the preceding claims, **characterised in that** an interlocking member (61) is provided on the seat bottom (57) and/or on the carriage (59) by means of which at least the seat bottom (57) is locked in the central seat position (14) and/or in the access position (36).

11. The vehicle as claimed in claim 1, **characterised in that** an adjustment device (75) is provided at least between the seat back (56) and the central column (54).

12. The vehicle as claimed in claim 1, **characterised in that** the central column (54) is disposed in the central seat position (14) and has either of a partitioning system (72) for a cargo area (71) located therebehind, a cargo area security device, and a built-in system fastened on its rear side.

13. The vehicle as claimed in any of the preceding claims, **characterised in that** the vehicle support structure (16) has two lateral longitudinal members (17) and at least one cross member (19) which together form a boat-like contour in which the longitudinal members (17) form a nose tip (18) on the front side and are connected on the rear side to the at least one cross member (19), with a front axle (27) being received near the nose tip (18) by the vehicle support structure (16), such that a front-side foot well (45) for the central seat position (14) of the driver is provided between two wheel housings of the front wheels (28).

14. The vehicle as claimed in any of the preceding claims, **characterised in that** at least the seat bottom (57) is displaceable by the pivoting device (35) along a circular path having a given radius in which the seat bottom (57) is offset backwards from the central position (14) with respect to an A pillar (49) of the passenger compartment (52) in the direction of the back of the vehicle when it is in an access position (36) facing towards the at least one door.

15. The vehicle as claimed in any of the preceding claims, **characterised in that** the pivoting device (35) has a pivotal area within which at least the seat bottom (57) may be laterally pivoted away from a central seat position (14) by an angle of between 10° and 50°, preferably between 20° and 40°.

## Revendications

1. Véhicule pourvu d'une structure porteuse de véhicule (16), d'un habitacle (22) qui est disposé sur la structure porteuse de véhicule (16) et qui est entouré au moins en partie par des éléments de carrosserie, et pourvu d'au moins une portière affectée à l'habitacle laquelle, vue dans la direction de déplacement, est disposée de manière latérale et permet l'accès audit habitacle, pourvu d'un siège conducteur (12) qui comprend au moins une assise (57) et un dossier (56) et qui est disposé dans une position de siège centrale (14) dans laquelle le siège conducteur (12) est positionné dans un axe central longitudinal de véhicule (55) ou à proximité dudit axe central longitudinal de véhicule (55) de la structure porteuse de véhicule (16), et dans laquelle au moins l'assise (57) du siège conducteur (12) peut passer, grâce à un dispositif de pivotement (35), d'une position de siège centrale (14) à une position d'accès (36) permettant l'accès à l'habitable (22), laquelle est située à proximité de ladite au moins une portière latérale ou de manière contiguë à celle-ci et qui se trouve en retrait par rapport à la position de siège centrale (14) dans le sens contraire au sens de déplacement, **caractérisé en ce que** dans l'habitacle (22) est prévue une colonne centrale (54) qui s'étend depuis un plancher de véhicule ou un élément de plancher de la structure porteuse de véhicule (16) jusqu'au plafond (51) de l'habitacle (22) et **en ce que** la colonne centrale (54) est disposée dans la position de siège centrale (14) et porte le dossier (56) du siège conducteur (12).

2. Véhicule selon la revendication 1, **caractérisé en ce que** l'assise (57) peut être déplacée par le dispositif de pivotement (35) en étant guidée le long d'un tracé circulaire.

3. Véhicule selon la revendication 1, **caractérisé en ce que** l'assise (57) peut être déplacée par le dispositif de pivotement (35) autour d'un point de rotation (39) fixe, de préférence à l'intérieur de l'habitacle (22).

4. Véhicule selon l'une quelconque des revendications précédentes, **caractérisé en ce que** le tracé circulaire du dispositif de pivotement (35) s'étend depuis l'axe central longitudinal de véhicule (55) jusqu'à au moins une portière latérale, de préférence jusqu'aux deux portières latérales.

5. Véhicule selon l'une quelconque des revendications précédentes, **caractérisé en ce que** le dispositif de pivotement (35) présente au moins un rail de guidage (41) le long duquel est guidé un chariot (59) de manière à pouvoir être déplacé, lequel reçoit ladite au moins une assise (57), de préférence **en ce que** ledit au moins un rail de guidage (41) est prévu sur une console de guidage (43) qui s'étend entre deux longerons (17) de la structure porteuse de véhicule (16).

6. Véhicule selon la revendication 5, **caractérisé en ce que** le chariot (59) peut être déplacé grâce à des galets de roulement (63) ou des éléments de glissement le long des rails de guidage (41).

7. Véhicule selon la revendication 5 ou 6, **caractérisé en ce que** deux rails de guidage (41) s'étendant de manière concentrique sont prévus sur la console de guidage (43), le long du tracé circulaire.

8. Véhicule selon la revendication 7, **caractérisé en ce que** trois galets de roulement associés (63) du chariot (49) ou des galets de roulement (63) du chariot (49) associés par paire engrènent dans les rails de guidage (41).

9. Véhicule selon l'une quelconque des revendications 6 à 8, **caractérisé en ce que** les galets de roulement (53) associés par paire et situés face à face sur le chariot (59) sont disposés de manière à être inclinés l'un vers l'autre selon un angle compris entre 1° et 80°, de préférence entre 1° et 45°.

10. Véhicule selon l'une quelconque des revendications précédentes, **caractérisé en ce que** sur l'assise (57) et/ou sur le chariot (59) est prévu un élément de verrouillage (61) grâce auquel au moins l'assise (57) est verrouillée dans la position de siège centrale (14) et/ou dans la position d'accès (36).

11. Véhicule selon la revendication 1, **caractérisée en ce qu'**un dispositif de réglage (75) est prévu au moins entre le dossier (56) et la colonne centrale (54).

12. Véhicule selon la revendication 1, **caractérisé en ce que** la colonne centrale (54) est disposée dans la position de siège centrale (14) et que sur ladite colonne centrale est fixé, à l'arrière, un système de cloisonnement (72) derrière lequel se trouve un espace de chargement (71) ou un élément de sûreté pour l'espace de chargement ou un système encastré.

13. Véhicule selon l'une quelconque des revendications précédentes, **caractérisé en ce que** la structure porteuse de véhicule (16) présente deux longerons latéraux (17) et au moins une traverse (19) qui forment un contour en forme de bateau dans lequel les longerons (17) forment, côté frontal, une partie avant en pointe (18) et sont reliés, côté arrière, à ladite au moins une traverse (19), un essieu avant (27) étant reçu, à proximité de la partie avant en pointe (18), par la structure porteuse de véhicule (16) de manière à prévoir, pour la position de siège centrale (14) du conducteur, un espace pour les pieds (45) situé, côté avant, entre deux passages de roue des roues avant (28).

14. Véhicule selon l'une quelconque des revendications précédentes, **caractérisé en ce qu'**au moins l'assise (57) peut être déplacée par le dispositif de pivotement (35) le long d'un tracé circulaire pourvu d'un rayon donné grâce auquel l'assise (57), lorsqu'elle est dans une position d'accès (36) tournée vers ladite au moins une portière, se trouve en retrait vers le fond par rapport à la position centrale (14) par référence à la colonne A (49) de l'habitacle (52).

15. Véhicule selon l'une quelconque des revendications précédentes, **caractérisé en ce que** le dispositif de pivotement (35) présente une zone de pivotement à l'intérieur de laquelle au moins l'assise (57) peut pivoter latéralement vers l'extérieur selon un angle de 10° à 50°, de préférence de 20° à 40°, à partir d'une position de siège centrale (14).
